# EUROPEAN PATENT APPLICATION

(11) **EP 4 769 157 A1**
(43) Date of publication of application: **01.07.2026**
(21) Application number: 25204157.9
(22) Date of filing: 23.09.2025
(51) Int. Cl.: G06F 12/02

(54) **MEMORY CONTROLLER, STORAGE DEVICE INCLUDING THE SAME, AND OPERATING METHOD THEREOF**

(30) Priority: 24.12.2024 KR 20240195943
(71) Applicant: Samsung Electronics Co., Ltd., Suwon-si, Gyeonggi-do 16677 (KR)
(72) Inventor: LEE, Jongwon, 16677 Suwon-si (KR)
(74) Representative: Marks & Clerk LLP

(57) **Abstract**

Provided is a storage device, memory processor, and an operating method thereof. More specifically, provided is an operating method of a storage device including acquiring quality of service (QoS) information, obtaining a read request or write request for data in the NVM from a host, and allocating a logical-to-physical (L2P) slot of a plurality of L2P slots including L2P mapping information corresponding to the data to at least one namespace among a plurality of namespaces of a dynamic random-access memory (DRAM) based on the QoS information.

## Description

### BACKGROUND

Example embodiments relate to a memory controller, a storage device including the same, and an operating method thereof.

A storage device may be classified under the non-volatile memory technologies and may use flash memory as a storage medium. The storage device is widely used in various applications, such as solid-state drives (SSD), embedded multimedia cards (eMMC), and universal flash storages (UFS), due to good read and write performance as well as low energy consumption. Flash memory may require a separate layer for efficient management due to its structural characteristics that require "erase before write" and limitations imposed by different write and erase unit sizes.

### SUMMARY

Some embodiments provide a memory controller for controlling a quality of service (QoS) of a logical-to-physical (L2P) storage space in a memory device, a storage device including the same, and an operating method thereof.

However, the goals to be achieved by example embodiments of the present disclosure are not limited to the objects described above and other objects may be clearly understood from the following description by those skilled in the art.

According to some embodiments, there is provided an operating method performed in a storage device including a non-volatile memory (NVM), the operating method including acquiring QoS information, obtaining a read request or write request for data on an NVM from a host, and allocating a logical-to physical (L2P) slot of a plurality of L2P slots including L2P mapping information corresponding to the data to at least one namespace among a plurality of namespaces of a dynamic random-access memory (DRAM) based on the QoS information.

According some embodiments, there is also provided a memory controller for controlling an operating method of a storage device including a non-volatile memory (NVM), the memory controller including a memory interface configured to communicate with the NVM, and a processor configured to control the memory interface, wherein the processor is configured to obtain quality of service (QoS) information, acquire a write request or read request for data from a host, and allocate a logical-to-physical (L2P) slot of a plurality of L2P slots including L2P mapping information corresponding to the data to at least one namespace among a plurality of namespaces of a dynamic random-access memory (DRAM).

According to some embodiments, there is provided a storage device including a dynamic random-access memory (DRAM) and a non-volatile memory (NVM), and a memory controller configured to control the DRAM and the NVM, wherein the memory controller is configured to obtain quality of service (QoS) information, acquire a write request or read request for data from a host, and allocate a logical-to-physical (L2P) slot including L2P mapping information corresponding to the data to at least one namespace among a plurality of namespaces of the DRAM based on the QoS information.

The QoS information may define a QoS requirement or target (e.g. a performance requirement or target) for each namespace. Different QoS requirements may be specified for different namespaces. A capacity of L2P slots included in each namespace may be less than a capacity of the L2P mapping information for that namespace. A ratio of the capacity of the L2P slots for a namespace relative to the size of the L2P mapping information for that namespace may be dependent on the QoS information for that namespace. For instance, the ratio may increase with increasing QoS (e.g. performance) requirements (e.g. lower latency, higher bandwidth, etc.).

In response to acquiring QoS information, L2P slot(s) may be allocated based on the QoS information. In response to failing to acquire QoS information, L2P slot(s) may be allocated based on a size ratio of each of a plurality of namespace of the NVM (e.g. the relative sizes of the namespaces of the NVM). For instance, for a first read request or a first write request, QoS information may be successfully acquired and the L2P slot may be allocated based on the QoS information. For a second read request or a second write request, QoS information may fail to be acquired, and the L2P slot may be allocated based on the size ratio of each of a plurality of namespace of the NVM (e.g. the relative sizes of the namespaces of the NVM).

At least some of the above and other features of the invention are set out in the claims.

Detailed descriptions of other example embodiments are included in the detailed description and drawings.

### BRIEF DESCRIPTION OF THE FIGURES

These and/or other aspects, features, and advantages of the invention will become apparent and more readily appreciated from the following description of example embodiments, taken in conjunction with the accompanying drawings of which:
FIG. 1 is a diagram illustrating a storage system including a storage device and a host according to example embodiments;
FIG. 2 is a flowchart for describing an operating method of a storage device according to example embodiments;
FIG. 3A is a block diagram illustrating a DRAM divided into a plurality of namespaces and managed according to example embodiments;
FIG. 3B is a diagram illustrating a DRAM with limited L2P slots for each namespace according to example embodiments;
FIG. 4 is a flowchart for describing an operating method of a storage device according to example embodiments;
FIG. 5 is a diagram illustrating a relationship between a DRAM namespace and an NVM namespace generated according to example embodiments;
FIG. 6 is a message flow diagram showing how a storage device maps a DRAM namespace in response to an instruction received from a host according to example embodiments;
FIG. 7 is a diagram illustrating data flow between an NVM namespace and a DRAM namespace and a meta load according to example embodiments;
FIGS. 8A, 8B, and 8C illustrate a DRAM namespace to which an NVM namespace and a L2P slot are allocated when QoS information is absent according to example embodiments; and
FIG. 9 is a block diagram illustrating a memory controller according to example embodiments.

### DETAILED DESCRIPTION

Terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

In the present disclosure, it will be understood that each block diagram of the flowchart illustration and combinations of the blocks in the flowchart illustrations can be executed by computer program instructions. These computer program instructions may be mounted on the processor of a general-purpose computer, a special purpose computer, or other programmable data processing apparatus, so that the instructions executed by the processor of the computer or other programmable data processing apparatus create means for executing the functions specified in the flowchart block(s). These computer program instructions may also be stored in computer-usable or computer-readable memory that can direct a computer or other programmable data processing equipment to function in a particular manner, such that the instructions stored in the computer-usable or computer-readable memory produce an article of manufacture including instruction means that implement the function specified in the flowchart block(s). The computer program instructions may also be loaded into a computer or other programmable data processing apparatus to cause a series of operational steps to be performed on the computer or other programmable apparatus to produce a computer-executed process, so that the instructions performing the computer or other programmable apparatus provide steps for executing the functions described in the flowchart block(s).

Furthermore, each block of the flowchart illustrations may represent a portion of a module, a segment, or code, which includes one or more executable instructions for implementing a specified logical function(s). It should also be noted that in some alternative implementations, the functions noted in the blocks may occur out of order. For example, two blocks shown in succession may in fact be executed substantially concurrently, or the blocks may sometimes be executed in the reverse order, depending upon the functionality involved.

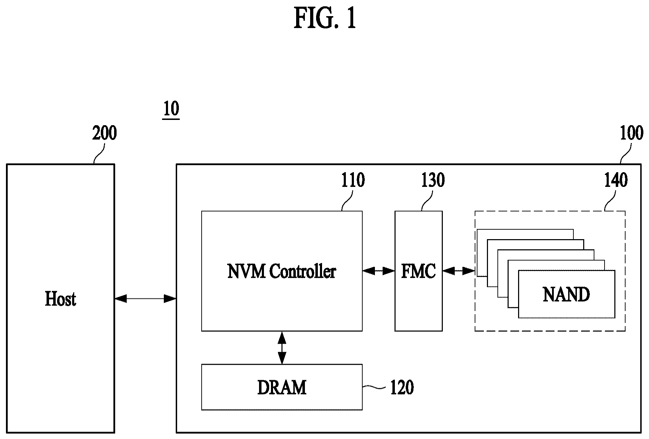

FIG. 1 is a diagram illustrating a storage system including a storage device and a host according to example embodiments.

Referring to FIG. 1, a storage system 10 according to example embodiments may include a storage device 100 and a host 200. In FIG. 1, the host 200 is illustrated as an external device of the storage device 100, however, in example embodiments, the host 200 may be included within the storage device 100.

According to example embodiments of the present disclosure, the storage device 100 may write or store data into the storage device 100 when requested by the host 200. Also, the storage device 100 may read stored data in response to a request from the host 200.

According to example embodiments, as illustrated in FIG. 1, the storage device 100 may include an NVM controller 110, a DRAM (dynamic random-access memory) 120, a flash memory controller (FMC) 130, and a plurality of NVMs 140 such as NAND flash memories (e.g. NANDs 140). Although FIG. 1 shows the storage device 100 including the plurality of NANDs 140, this is merely an example, and example embodiments of the present disclosure are not limited thereto. That is, any type of NVM may be used. For example, the storage device 100 may include NOR flash memories, resistive memories, and the like.

The NVM controller 110 according to example embodiments may perform a role of a central processing unit within the storage device 100, and may control data flow between the host 200 and the storage device 100. Also, the NVM controller 110 may control internal components of the storage device 100 including the DRAM 120, FMC 130 and plurality of NANDs 140. The NVM controller 110 may manage L2P mapping which converts a logical block address (LBA) to a physical block address (PBA), and may optimize a data access speed using a single-level cell (SLC) region included in the DRAM 120 and the plurality of NANDs 140. In addition, the NVM controller 110 may maintain durability and performance of the plurality of NANDs 140 through wear leveling, garbage collection, and the like of the plurality of NANDs 140.

In some embodiments, the NVM controller 110 may generate a program command for instructing a program operation for a plurality of chips of the plurality of NANDs 140 included in the storage device 100, in response to a host write command received from the host 200. In the present disclosure, the program command may refer to a command sent to the FMC 130 from the NVM controller 110. That is, the program command may be distinguished from the host write command sent from the host 200. The host write command is a command instructing to write data, and may be sent to the NVM controller 110 once (e.g. once per write operation). The program command generated from the NVM controller 110 may be sent to one or more (e.g. each) of the plurality of chips of the plurality of NANDs 140 more than once.

According to example embodiments, the storage device 100 may be included in a database server, and the NVM controller 110 may control communication between the host 200 and the plurality of NANDs 140 to process read requests or write requests on large-scale data.

According to example embodiments, the DRAM 120 may refer to a high-speed memory of the storage device 100 and be capable of minimizing response time to a request from the host 200 by caching frequently used data and L2P mapping information. Since the DRAM 120 has a higher read and write speed than that of the plurality of NANDs 140, the NVM controller 110 may reduce bottlenecks that may occur while processing data requests of the storage system including storage device 100 by using the DRAM 120, thereby improving the overall performance. In the present disclosure, the term "caching" may be used to indicate a process of temporarily copying or storing frequently used data or data with high probability of being used, to a location where faster access is possible.

In a storage device using a flash memory, a logical sector number and a physical sector number may be mapped through a flash translation layer (FTL). The flash translation layer may overcome structural limitations of the flash memory and may use the storage device as a block-based storage device. The flash translation layer may have different levels of performance and different levels of implementation difficulty depending on a mapping method used, and a dynamic random-access memory (DRAM 120) may be used to manage mapping information more effectively. As capacity of the storage device 100, that is, a capacity of the plurality of NANDs 140, increases, it may not be easy (or possible) to store an entire mapping table into the DRAM 120 due to limitations of the DRAM 120. According to example embodiments, the flash translation layer may adopt a demand loading method. For example, the flash translation layer may load mapping information into the DRAM 120 when needed, and accordingly, limited size of the DRAM 120 may be maintained despite increased capacity of the storage device 100.

Also, the NVM controller 110 may perform caching and meta load operations of the DRAM 120 to meet QoS requirements in the SSD, which uses a non-volatile memory express (NVMe) protocol.

The meta load may refer to an operation of retrieving L2P mapping information that is not included in a cache of the DRAM 120, from a meta data region (e.g., a SLC region) of the storage device 100, to the DRAM 120. When a request for data is made to the cache, but the data is not found in the cache, a cache miss occurs. When a cache miss occurs, an input/output (I/O) request may be processed by loading a physical block address (PBA) corresponding to a requested logical block address to the DRAM 120.

According to example embodiments, the DRAM 120 may be managed as an independent cache region (memory namespace) by logically dividing its space for each namespace. Here, the namespace may be a logically independent space for data storage within the storage device 100. NVM namespaces may be allocated to NVM(s) (e.g. NANDs 140) to logically divide storage space in the storage device. As an example, namespaces may isolate user data and system data so that they do not affect each other, and may have a logical structure to manage a storage resource efficiently. Also, the size of the namespace may vary, and sizes of the plurality of NANDs 140 corresponding to the namespace may also vary. The host 200 may perceive each namespace (e.g. each NVM namespace) as an independent logical disk, and the storage device 100 may perform operations such as read, write, QoS settings, and cache allocation, for each namespace independently.

DRAM namespaces may also be provided. That is, the DRAM may be divided into independent cache regions (e.g. DRAM namespaces), with each cache region (e.g. DRAM namespace) corresponding to one or more of the NVM namespaces. A DRAM namespace may be used to cache data and/or metadata for the corresponding one or more NVM namespaces. For instance, L2P mapping data for the corresponding one or more NVM namespaces may be cached in the DRAM namespace.

The FMC 130, according to example embodiments, may perform a role of controlling the plurality of NANDs 140 and transmitting data by communicating with the plurality of NANDs 140 directly. Since the plurality of NANDs 140 process data in page or block units, the FMC 130 may perform an error correction code (ECC) to address data error whilst optimizing such a process. Also, the FMC 130 may process a management operation of the plurality of NANDs 140, such as the wear leveling and garbage collection, to secure lifespan and stability of the plurality of NANDs 140.

According to example embodiments, the plurality of NANDs 140 may be an NVM for storing data of the host 200. Chips of the plurality of NANDs 140 may be arranged in parallel in the storage device 100 to increase data access speed and support capacity expansion. The plurality of NANDs 140 may be formed to have different structures, such as SLC, triple level cell (TLC), and quad level cell (QLC) and a data storage space may be logically divided in one or more NVM namespaces. The plurality of NANDs 140 may perform conversion between a physical block address and a logical block address through a L2P mapping table, and may read or write data when requested by the host 200.

The host 200, as a main agent of a system interacting with the storage device 100, may send a read request or write request (read/write IO request) to the storage device 100 or instruct to manage resources of the storage device 100 (e.g., to generate, delete, or adjust size of a namespace). The host 200 may request data based on a logical block address (LBA), and the storage device 100 may process the request by converting the logical block address into a physical block address (PBA) in response. The host 200 may utilize resources of the plurality of NANDs 140 and the DRAM 120 indirectly through the NVM controller 110 within the storage device 100.

The host 200 may store or manage data as a storage user, and may be in charge of an interface with the storage device 100. For example, the host 200 may be a system, such as an operating system, an application, or a server. Also, the host 200 may have a logical structure, for instance, a namespace, of the storage device 100, to manage latency and QoS. The host 200 may be embodied as a server, a personal computer operating system, an IoT device, an embedded system, and the like and communicate with the storage device 100 through a standard protocol, such as NVMe. For example, a server of a cloud service may operate as the host 200 and store or retrieve data based on a user request.

Although not shown in FIG. 1, the NVM controller 110 may further include a volatile memory and a host interface. For example, the volatile memory may be a random-access memory (RAM), but this is merely an example. The volatile memory may be used as an operation memory of the NVM controller 110. For example, the volatile memory may temporarily store data to be stored in a memory cell of the storage device 100. In addition, the host interface may be a device for allowing interaction between the host 200 and the NVM controller 110. Accordingly, the NVM controller 110 may be configured to communicate with the host 200 through at least one of various interface protocols, such as a universal serial bus (USB), multi-media card (MMC), peripheral component interconnect express (PCI-E), an advanced technology attachment (ATA), a serial-ATA, a parallel-ATA, a small computer system interface (SCSI), an enhanced small disk interface (ESDI), and/or an integrated drive electronics (IDE).

According to the above-description, the capacity of the plurality of NANDs 140 may be increased to implement a large-capacity storage device 100, however, a L2P storage space may be restricted by limited capacity of the DRAM 120. When the demand loading method is implemented, securing QoS and controlling for the delay may become difficult due to competition between namespaces, and L2P occupancy in preference may increase in a namespace in which I/O occurs frequently.

As will be described with reference to the drawings below, the storage device 100 according to example embodiments of the present disclosure may secure QoS by dividing and allocating L2P resources between namespaces and ease delay control. Hereinafter, a method of the storage device 100 securing the QoS by dividing and allocating the L2P resources between the namespaces in detail will be described.

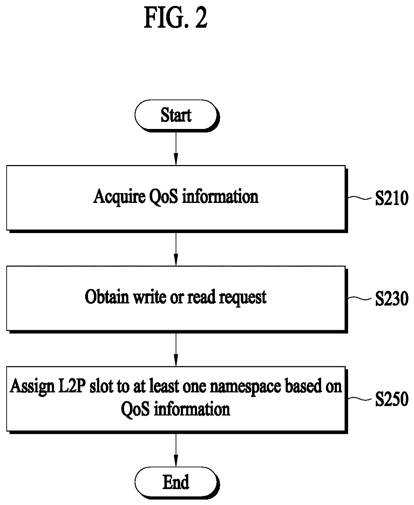

FIG. 2 is a flowchart for describing an operating method of a storage device according to example embodiments. For example, the flowchart of FIG. 2 shows an operation of allocating a L2P slot to a namespace (e.g. to a namespace of the DRAM 120 (e.g. a DRAM namespace)).

Referring to FIGS. 1 and 2, QoS information may be acquired in operation S210. For example, the storage device 100 may acquire the QoS information from the host 200. The QoS information may QoS information of the storage device 100. The QoS information may relate to performance (e.g. latency) requirements of the storage device 100. Different QoS information may be provided for different namespaces (e.g. different DRAM namespaces and/or different NVM namespaces).

Here, the QoS information may include a performance target (e.g. a minimum performance requirement) that is set from the storage device 100 to guarantee performance and service quality. For example, the QoS information may include major elements such as a bandwidth, latency, input/output operations per second (IOPS), order of priorities, and write-intensity. According to example embodiments, the QoS information may be set for each namespace of the DRAM 120. The bandwidth may refer to a maximum amount of data processed per unit time. A minimum data processing speed requested by a particular namespace may be set. The latency may define a response time to a data request, and may play an important role in an application that needs to perform real-time data processing or have low response time. The IOPS may refer to a maximum number of input/output operations processed per second, and may guarantee workload processing performance through the IOPS set for each namespace.

The order of priorities may refer to an element used to determine an order of operations for each namespace, and operations requiring high performance may be given with high priority and operations such as backup and non-real time operations may be given with low priority.

The write-intensity may refer to a setting that limits the intensity of the write operation to manage the durability of a NAND flash. In other words, the QoS information may provide standards for resource allocation and performance optimization of the storage device 100, and may be set and managed based on a requirement of each namespace of the DRAM 120.

In operation S230, a write request or read request may be obtained from the host 200. For example, the storage device 100 may receive a write request or read request from the host 200.

The storage device 100 according to example embodiments, may receive and process the write request or read request through communication with the host 200. For example, the storage device 100 may receive the write request or read request for data based on a logical block address from the host 200, and process the data internally in response.

For example, when the storage device 100 receives a write request, the storage device 100 may map the logical block address to a physical block address to store data provided by the host 200 into the plurality of NANDs 140, and may update L2P mapping information to the DRAM 120 if required. When the storage device 100 receives a read request, the storage device 100 may return data corresponding to the logical block address the host 200 requested if the data exists in the DRAM 120, and if the data does not exist in the DRAM 120, the storage device 100 may return the data by reading from the plurality of NANDs 140.

In operation S250, a L2P slot may be allocated to at least one namespace based on the QoS information. For example, the NVM controller 110, based on the QoS information, may allocate the L2P slot, including L2P information corresponding to data, to at least one namespace among the plurality of namespaces.

According to example embodiments, a plurality of namespaces may be provided, and the NVM controller 110 may allocate a limited number of L2P slots to each of the plurality of namespaces based on the QoS information. In example embodiments, the NVM controller 110 may limit the number of L2P slots allocated to each namespace based on a QoS standard. For example, the DRAM 120 may include a first namespace and a second namespace, wherein the first namespace may correspond to a QoS which requires high bandwidth and/or low latency, and the second namespace may correspond to a QoS which requires low priority and/or mid-level bandwidth. For instance, the first namespace may correspond to a QoS which requires a first minimum bandwidth and/or a first maximum latency, and the second namespace may correspond to a QoS which requires second minimum bandwidth and/or second maximum latency, wherein the first minimum bandwidth is higher than the second minimum bandwidth, and/or the first maximum latency is lower than the second maximum latency. That is, the QoS for the first namespace may specify a higher minimum performance (e.g. minimum QoS) than the QoS for the second namespace. The NVM controller 110 may allocate a higher number of L2P slots to the first namespace than the second namespace.

According to example embodiments, the plurality of namespaces may each have equal sizes.

According to example embodiments, the NVM controller 110 may identify QoS information received from the host 200 and determine a DRAM 120 resource to be allocated, based on a performance requirement (e.g., bandwidth, latency, and IOPS) of each namespace of the DRAM 120. By allocating L2P mapping information to a namespace based on the QoS information, the storage device 100 may fulfill a performance requirement of the namespace, and guarantee operational priority.

Here, the L2P slot may refer to data that connects the logical block address and the physical block address. The L2P slot may be stored in the DRAM 120 to optimize a processing speed of an IO request. Each of the plurality of namespaces of the DRAM 120 may be managed independently, and the NVM controller 110 may process a data request of the host 200 using a L2P slot allocated to each namespace.

According to example embodiments, the demand loading method may be applied to manage L2P mapping information. Here, the demand loading method may refer to a method of loading data, which is required to store L2P mapping information, into a L2P slot of the DRAM 120, when requested by the host 200. According to example embodiments, the demand loading method may be applied in combination with a least recently used (LRU) method. For example, when the host 200 requests data required but L2P slots of the DRAM 120 are all occupied, the storage device 100 may relocate the oldest L2P mapping information first from the L2P slot, into, for example, the plurality of NANDs 140, and load L2P mapping information corresponding to the data requested to a L2P slot of a namespace of the DRAM 120.

According to example embodiments, the L2P slot may be in at least one of a clean state, a dirty state, and/or a provisioning state. Here, the clean state may refer to a state in which L2P mapping information included in a L2P slot is valid or stable. The provisioning state may refer to a state in which the L2P mapping information included in the L2P slot is in preparation or in progress. For instance, the provisioning state may refer to a state in which writing of L2P mapping information included in the L2P slot is in preparation or in progress. The dirty state may refer to a state in which L2P mapping information included in a L2P slot is deleted or changed.

According to example embodiments, the NVM controller 110 may set a size of a L2P slot according to whether the NVM controller 110 is in the clean state, the dirty state, or the provisioning state. For example, when a L2P slot is in the clean state or the dirty state, the NVM controller 110 may regard the L2P slot as a space reserved for reading and writing of data, and use the L2P slot. When a L2P slot is in the provisioning state, the NVM controller 110 may regard the L2P slot as excluded from reading and writing of data (e.g. the NVM controller 110 may prevent new read operations and/or new write operations to/from the L2P slot until provisioning has been completed).

According to example embodiments, the NVM controller 110 may be requested to perform a writing or reading operation of additional data by the host 200. Based on whether L2P mapping information corresponding to the additional data exists in the plurality of namespaces of the DRAM 120, the L2P mapping information of the additional data may be allocated to one of the plurality of namespaces.

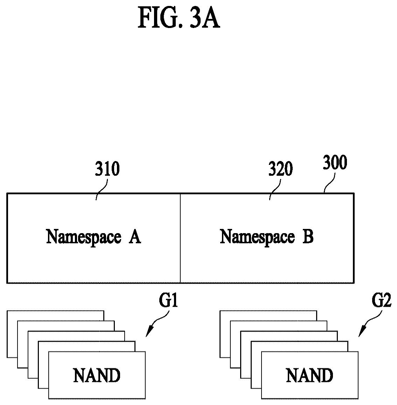

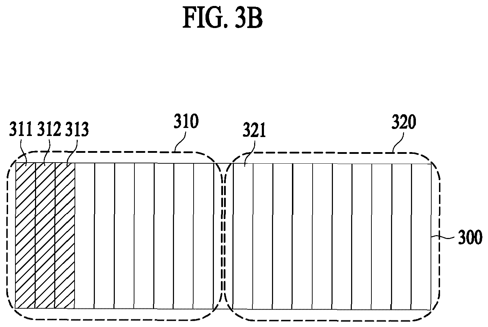

FIG. 3A is a block diagram illustrating a DRAM divided into a plurality of namespaces and managed according to example embodiments, and FIG. 3B is a diagram illustrating a DRAM with limited L2P slots for each namespace according to example embodiments.

Referring to FIGS. 1 and 3A, a DRAM 300 may include a namespace A 310 and a namespace B 320. In the present disclosure, although the DRAM 300 is illustrated as including two namespaces, this is merely an example. For example, the DRAM 300 may include three or more namespaces. Here, the namespace A 310 and the namespace B 320 may correspond to logically divided spaces within the DRAM 300, instead of physically divided spaces.

According to example embodiments, the NVM controller 110 may divide the DRAM 300 so that sizes of the namespace A 310 and the namespace B 320 are equal. For example, when an entire space of the DRAM 300 is one gigabyte (e.g. 1024 megabytes), the NVM controller 110 may allocate 512 megabytes to the namespace A 310, and allocate the remaining 512 megabytes to the namespace B 320.

According to example embodiments, the namespace A 310 and the namespace B 320 may each be mapped to at least one NVM among a plurality of NVMs (e.g. at least one NAND among the plurality of NANDs 140 (of FIG. 1)). For example, as shown in FIG. 3A, the namespace A 310 may be mapped to a first NAND group G 1 which includes at least one NAND, and store L2P mapping information, and the namespace B 320 may be mapped to a second NAND group G2 which includes at least one NAND, and store L2P mapping information.

According to example embodiments, the host 200 may provide a write request or read request for data to the storage device 100, and the storage device 100 may check if L2P information corresponding to the data exists in a L2P slot of the namespace A 310 and perform the meta load or perform a read or write operation for the data from the first NAND group G1.

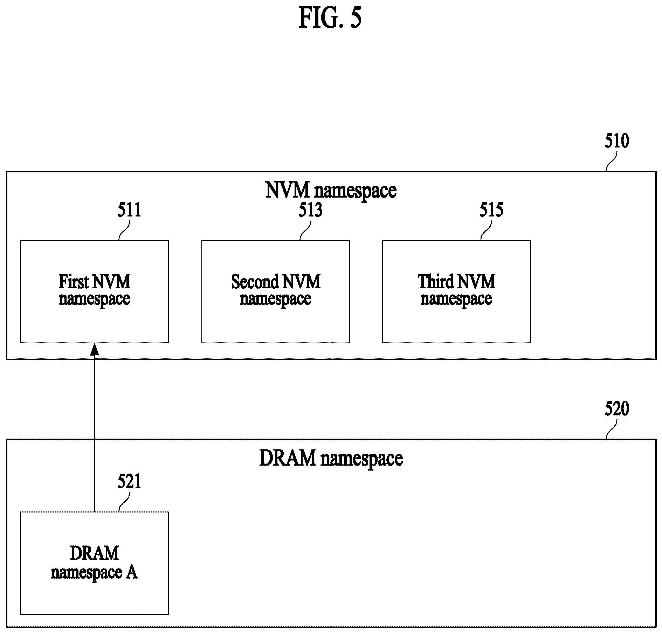

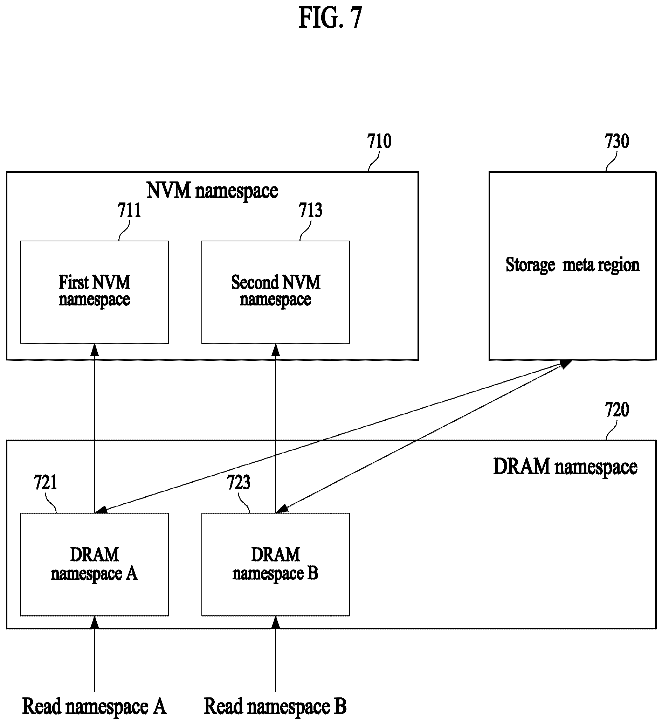

An example of performing reading or writing data from and to a namespace of a plurality of NANDs in response to a read request or write request received from the host 200 will be described in detail with reference to FIGS. 5 and 7.

Referring to FIG. 3B, a space of the DRAM 300 may include the namespace A 310 and the namespace B 320, and each namespace may include a plurality of L2P slots.

According to example embodiments, the NVM controller 110 may limit the number of L2P slots of the DRAM 300 based on a QoS. In addition, or alternatively, the NVM controller 110 may limit the number of L2P slots based on a state of each slot. For example, the NVM controller 110 may limit the number of L2P slots for a given state to a particular proportion of the total number of slots for the namespace. For example, the NVM controller 110 may limit the number of L2P slots of the namespace in the clean state and dirty state (e.g. in either the clean state or dirty state) to be a first percentage of the total number of slots for the namespace, and may limit the number of L2P slots of the namespace in provisioning state to a second percentage of the total number of slots for the namespace. The first percentage and the second percentage may add up to 100%. For example, the NVM controller 110 may limit the number of L2P slots in the clean state and dirty state (e.g. in either the clean state or dirty state) to be 70 percent (%) of the total number of slots for the namespace A 310, and may limit the number of L2P slots of the namespace A 310 in provisioning state to 30% of the total number of slots.

When a first slot 311, a second slot 312, and a third slot 313 of the namespace A 310 are all in the provisioning state and trying to load L2P mapping information to the namespace A 310, the NVM controller 110 may check for a L2P slot of the namespace B 320. When a fourth slot 321 includes data in the clean state, the NVM controller 110 may load the requested L2P mapping information to the fourth slot 321 of the namespace B 320. Accordingly, the NVM controller 110 may utilize a L2P slot space between namespaces and manage QoS and/or latency.

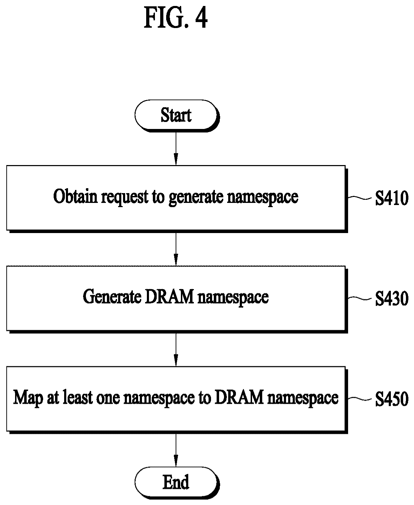

FIG. 4 is a flowchart for describing an operating method of a storage device according to example embodiments. For example, the flowchart of FIG. 4 shows an operation of adding a namespace in response to a request from a host.

Referring to FIGS. 1 and 4, a request to generate a namespace may be obtained in operation S410. For example, the storage device 100 may receive a request to generate a namespace from the host 200. The host 200 may request the storage device 100 to generate a new namespace in the DRAM 120 for efficient storage space management.

In operation S430, a DRAM namespace may be generated. For example, the storage device 100 may generate the DRAM namespace based on a predetermined size or a subsystem local memory (SLM) ratio, in response to the request received in operation S410. For example, the DRAM namespace may refer to a namespace which is logically allocated within the DRAM 120 of FIG. 1.

The storage device 100 may set a size when generating the DRAM namespace, based on a fixed size (a predetermined size) or a ratio relative to total resources of the DRAM 120 (e.g., SLM ratio). In this case, the storage device 100 may be able to allocate DRAM 120 resources efficiently, based on a performance target (e.g., bandwidth and IOPS) requested by a host 200.

In operation S450, at least one NVM namespace may be mapped to the DRAM namespace. According to example embodiments, the storage device 100 may map the DRAM namespace to a plurality of NVM namespaces, that is, one NVM namespace among the plurality of namespaces, based on the request. For example, the NVM namespace may refer to a namespace which is logically allocated within an NVM, that is, the plurality of NANDs 140 of FIG. 1.

According to example embodiments, the NVM may include the plurality of NANDs 140, and the NVM namespace may refer to a plurality of namespaces of each NAND, and may be divided for management.

According to example embodiments, the NVM controller 110 may receive a request to change a DRAM namespace that needs to be changed from the host 200. For example, the NVM controller 110 may receive a request to de-map an NVM namespace mapped to the DRAM namespace.

According to example embodiments, the NVM controller may indicate a plurality of L2P mapping relationships stored in the DRAM namespace as not valid (i.e., invalid) or remove the plurality of L2P mapping relationships stored in the DRAM namespace in response to the request.

Accordingly, the NVM controller 110 may cease using the DRAM namespace indicated as not valid or removed, and may use the DRAM namespace as a new namespace or delete the DRAM space.

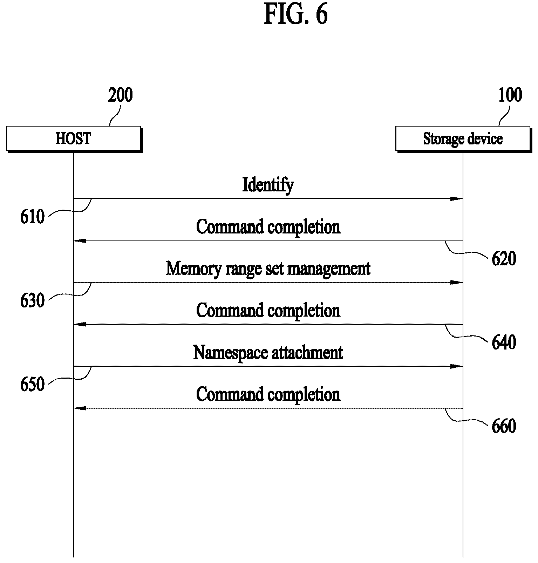

Hereinafter, a method of mapping a DRAM namespace and an NVM namespace will be described in detail with reference to FIGS. 5 and 6.

FIG. 5 is a diagram illustrating a relationship between a DRAM namespace and an NVM namespace generated according to example embodiments.

Referring to FIGS. 1 and 5, an NVM namespace 510 may include a first NVM namespace 511, a second NVM namespace 513, and a third NVM namespace 515. The first NVM namespace 511, the second NVM namespace 513, and the third NVM namespace 515 may each be attached to a physical block in the plurality of NANDs 140 of FIG. 1, and correspond to a space in which real data is stored.

The host 200 of FIG. 1 may request the storage device 100 to generate a DRAM namespace for storing L2P information. The NVM controller 110 may generate a DRAM namespace A 521 in a DRAM namespace 520 of the DRAM 120, in response to the request from the host 200. In this case, the NVM controller 110 may set a size based on a fixed size (predetermined size) or a ratio (e.g. SLM ratio) relative to the total DRAM 120 resources (e.g. total resources within DRAM namespace 520). The storage device 100 may allocate DRAM resources efficiently based on a performance target (e.g., bandwidth and IOPS) requested by the host 200.

When the DRAM namespace A 521, in which a L2P mapping slot will be stored, is generated, the NVM controller 110 may attach the first NVM namespace 511, among the first NVM namespace 511, the second NVM namespace 513, and the third NVM namespace 515, in which L2P mapping information stored in the L2P mapping slot and actual data to be mapped are stored, and report completion of the attachment to the host 200.

FIG. 6 is a message flow diagram showing how a storage device maps a DRAM namespace in response to an instruction received from a host according to example embodiments.

Referring to FIG. 6, the host 200 according to example embodiments, may send an identify instruction to the storage device 100 in operation 610. For example, the host 200 may send the identify instruction to the storage device 100 to check current state of the storage device 100 and available functions. The identify instruction may perform a role of requesting information on resources and functions available from the storage device 100, and the storage device 100 may send a message to the host 200 that the instruction has been executed, by returning information on the resources and functions available from the storage device 100 (e.g. possibility of forming a namespace, memory range, state of protocol support, and the like). A command completion 620 may be sent from the storage device 100 to the host 200 upon completion of the identify instruction.

According to example embodiments, the host 200 may send a memory range set management instruction to the storage device 100 in operation 630. For example, the host 200 may send the memory range set management instruction to the storage device 100 to set a particular memory range. The memory range set management instruction may include an instruction for specifying a size and a range of a memory to be allocated to a namespace among resources of the DRAM and NVM, and the storage device 100 may divide and set memory resources based on the instruction received. For example, the memory range set management instruction may include a request to allocate 50% of the DRAM to the namespace A and the rest of the DRAM to the namespace B. When the setting is completed, the storage device 100 may send to the host 200 a response notifying a completion of the instruction's execution in operation 640.

According to example embodiments, the host 200 may send a namespace attachment instruction to the storage device 100 in operation 650. For example, the host 200 may send the namespace attachment instruction to the storage device 100 to attach a DRAM namespace to an NVM namespace. The namespace attachment instruction may set a logical mapping between a namespace generated in a DRAM and an NVM namespace, and through this, the storage device 100 may process NVM data effectively using data stored in the DRAM. The storage device 100 may send a response notifying a successful completion of the mapping to the host in operation 660.

FIG. 7 is a diagram illustrating data flow between an NVM namespace and a DRAM namespace and a meta load according to example embodiments.

Referring to FIGS. 1 and 7, a DRAM namespace 720 of the DRAM 120 may include a DRAM namespace A 721 and a DRAM namespace B 723, and each DRAM namespace may include a L2P slot in which L2P mapping information is stored. Although the DRAM namespace 720 in the present disclosure is described as having two namespaces for the purpose of simplification, this is merely an example. The DRAM namespace 720 may include one, or more than three namespaces.

An NVM namespace 710 of the plurality of NANDs 140 of FIG. 1 may include a first NVM namespace 711 and a second NVM namespace 713. Although the NVM namespace 710 in the present disclosure is described as having two namespaces for the purpose of simplification, this is merely an example. The NVM namespace 710 may include one, or more than three namespaces.

According to example embodiments, the DRAM namespace A 721 may be allocated to the first NVM namespace 711, and the DRAM namespace B 723 may be allocated to the second NVM namespace 713. Here, a size of the DRAM namespace A 721 may be set to be one-quarter of the first NVM namespace 711 (e.g. one-quarter of the size of the L2P mapping information corresponding to the first NVM namespace 711), and a size of the DRAM namespace B 723 may be set to be half of the second NVM namespace 713 (e.g. half the size of the L2P mapping information corresponding to the second NVM namespace 713), by the NVM controller 110.

When a read request for the DRAM namespace A 721 (Read namespace A) (e.g. a read request for data contained in the first NVM namespace 711) is received from the host 200 and corresponding L2P mapping information is absent in the DRAM namespace A 721 of the DRAM 120, the meta load may be performed in a storage meta region 730, which is a predetermined partition (e.g., SLC) of the plurality of NANDs 140 of FIG. 1. Here, since the size of the DRAM namespace A 721 is one-quarter of the first NVM namespace 711 (e.g. one-quarter of the size of the L2P mapping information corresponding to the first NVM namespace 711), a probability of the meta load being performed will be shown as 75%.

When a read request of the DRAM namespace B 723 (Read namespace B) (e.g. a read request for data contained in the second NVM namespace 713) is received from the host 200, since the size of the DRAM namespace B 723 is half of the second NVM namespace 713 (e.g. half of the size of the L2P mapping information corresponding to the second NVM namespace 713), a probability of the meta load being performed may be 50%. Accordingly, a probability of the meta load being performed when requested to read from the DRAM namespace B 723 may be lower than 75%, which is the probability of meta load being performed when requested to read data from the DRAM namespace A 721. Such probability differences are caused by size differences between DRAM namespaces 720, and because the DRAM namespace B 723 is capable of maintaining a relatively higher amount of L2P mapping information in the DRAM 120, the probability of the meta load being performed in the DRAM namespace B 723 may be lower than the probability of the meta load being performed in the DRAM namespace A 721. Accordingly, a read response time (e.g. an average read response time) of the DRAM namespace B 723 may be lower than that of the DRAM namespace A 721.

Therefore, when a namespace of the DRAM 120 is not separated, L2P mapping information of a DRAM namespace, with frequent I/O requests, may be maintained in the DRAM 120 with highest priority. Thus, the DRAM namespace may complete I/O processing quickly without the meta load, but other DRAM namespace may be required to perform the meta load each time prior to the I/O processing as L2P mapping information is absent in the DRAM 120.

Example embodiments of the present disclosure may prevent resources from being used by one namespace exclusively, and fulfill QoS requirements of each namespace by dividing a DRAM namespace for each namespace and managing L2P mapping information independently.

According to example embodiments of the present disclosure, QoS information of the storage device 100 of FIG. 1 acquired from the host 200 may not exist or the storage device 100 may have failed to acquire the QoS information. In this case, the storage device 100 may divide an NVM namespace matched to the plurality of NANDs 140 into a random number of NVM namespaces, and map a L2P slot to a DRAM namespace based on sizes of the divided NVM namespaces.

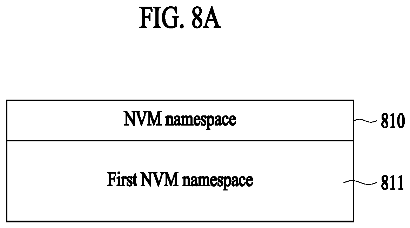

A method of allocating a L2P slot based on a ratio of each namespace when the storage device 100 according to example embodiments does not have QoS information or fails to acquire the QoS information (that is, an acquisition of the QoS information has failed) will be described with reference to FIGS. 8A through 8C.

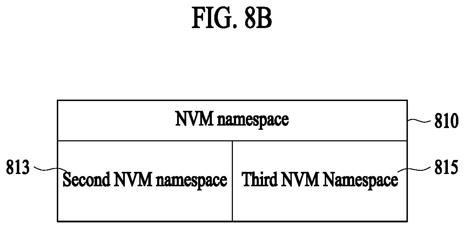

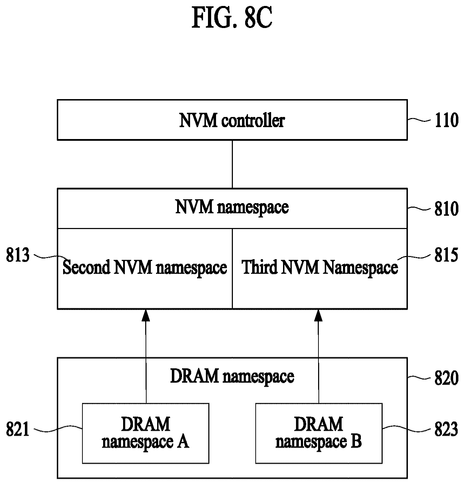

FIGS. 8A, 8B, and 8C illustrate a DRAM namespace in which an NVM namespace and a L2P slot is allocated when QoS information is absent according to example embodiments.

Referring to FIG. 8A, an NVM namespace 810 according to example embodiments may include one first NVM namespace 811 in the beginning. Here, the NVM namespace 810 may refer to a space in which a logical block address for accessing the plurality of NANDs 140 of FIG. 1 is stored.

According to example embodiments, the first NVM namespace 811 may be allocated with a size equal to a total capacity of the plurality of NANDs 140. The first NVM namespace 811 may be a space in which an index value of a logical block address from 0 to the maximum logical address index value corresponding to the maximum capacity of the plurality of NANDs 140 is stored.

To generate two NVM namespaces in the NVM namespace 810, the NVM controller 110 of FIG. 1 may delete the existing first NVM namespace 811 and generate two NVM namespaces.

To delete the first NVM namespace, the NVM controller 110 according to example embodiments may execute an instruction to de-map (detach namespace) the first NVM namespace 811, and may execute an instruction to delete (delete namespace) the first NVM namespace 811.

Referring to FIG. 8B, the NVM controller 110 according to example embodiments may issue an instruction to generate (create namespace) a second NVM namespace 813, which is half the size of the first NVM namespace 811, and may also instruct to generate a third NVM namespace 815 in the same manner.

According to example embodiments, with respect to a size of an NVM namespace 810, half of the total capacity of the plurality of NANDs 140 may be allocated to the second NVM namespace 813 and another half to the third NVM namespace 815 respectively. For example, the second NVM namespace 813 may be a space in which an index of a logical address may be stored, ranging from zero to (maximum logical address index/2 -1), and the third NVM namespace 815 may be a space in which an index of a logical address is stored, ranging from (maximum logical address index/2) to a maximum logical address index.

According to example embodiments, the NVM controller 110 may attach the second NVM namespace 813 and the third NVM namespace 815 to the NVM controller 110 through an instruction to attach (attach namespace) for the second NVM namespace 813 and the third NVM namespace 815 generated. When the second NVM namespace 813 and the third NVM namespace 815 are attached to the NVM controller 110, the NVM controller 110 may allocate a L2P slot using the second NVM namespace 813 and the third NVM namespace 815.

Referring to FIG. 8C, the NVM controller 110 according to example embodiments may be connected to the second NVM namespace 813 and the third NVM namespace 815 within the NVM namespace 810, and the second NVM namespace 813 and the third NVM namespace 815 may be mapped to a DRAM namespace A 821 and a DRAM namespace B 823, which are allocated to the DRAM namespace 820, respectively. Here, the DRAM namespace A 821 and the DRAM namespace B 823 may each be allocated with a size smaller than sizes of the second NVM namespace 813 and the third NVM namespace 815 respectively.

The NVM controller 110 according to example embodiments may allocate a L2P slot to the DRAM namespace A 821 and the DRAM namespace B 823 in proportion to sizes of the second NVM namespace 813 and the third NVM namespace 815. For example, when sizes of the second NVM namespace 813 and the third NVM namespace 815 are equal, the NVM controller may allocate a L2P slot to the DRAM namespace A 821 and the DRAM namespace B 823 in the same ratio.

Accordingly, the NVM controller 110 may allocate a L2P slot in proportion to sizes of a plurality of NVM namespaces even when QoS information is absent. Thus, the NVM controller 110 may still be able to eliminate interference between DRAM namespaces even when the QoS information is absent. In other words, the NVM controller 110 may be capable of preventing competition between DRAM namespaces for allocating storage space in the demand loading method.

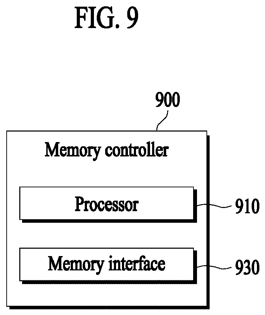

FIG. 9 is a block diagram illustrating a memory controller according to example embodiments.

Referring to FIG. 9, a memory controller 900 according to example embodiments may include a processor 910 and a memory interface 930. Here, the memory controller 900 may be a device for controlling various operations of a memory device which includes a plurality of chips. For example, the memory controller 900 may control a program operation, read operation, and erase operation of a memory device. In addition, the memory controller 900 may perform an identical or similar function as that of the NVM controller 110 of FIG. 1.

A processor 910 according to example embodiments may control overall operations of the memory controller 900. The processor 910 may control a program operation of a memory device. More specifically, the processor 910 may generate a program command including information on a plurality of start word lines in different locations within a plurality of target blocks corresponding to a plurality of chips which are included in a memory device. Here, the program command may include a plurality of program commands for each of the plurality of chips. That is, the processor 910 may control the program operation of each of the plurality of chips independently by sending each of the plurality of program commands to corresponding chips through the memory interface 930.

The processor 910 according to example embodiments may acquire QoS information, acquire a write or read data request from a host, and allocate a L2P slot including L2P mapping information corresponding to the data based on the QoS information.

The memory interface 930 according to example embodiments may be a device for allowing interaction between the memory controller 900 and an external device. More specifically, the memory interface 930 refers to an interface for allowing interaction between the memory controller 900 and a memory device, and may be connected to an address (ADDR) pin, a command (CMD) pin, a data (DATA) pin, and a control (CTRL) pin.

However, although example embodiments of the present disclosure are set forth in the present specification and drawings and specific terms are used herein, they are merely provided in a general sense to easily explain the technical idea of the present disclosure and help understanding of the present disclosure and are not intended to limit the scope of the present disclosure. Also, it will be obvious to those skilled in the art that other modified examples based on the technical spirit of the present disclosure can be implemented.

The storage device 100 in accordance with the example embodiments described above may include a processor, a memory which stores and executes program data, a permanent storage such as a disk drive, a communication port for communication with an external device, and a user interface device such as a touch panel, a key, and an icon. Methods realized by software modules or algorithms may be stored in a computer-readable recording medium as computer-readable codes or program commands which may be executed by the processor. Here, the computer-readable recording medium may be a magnetic storage medium (for example, a read-only memory (ROM), a random-access memory (RAM), a floppy disk, or a hard disk) or an optical reading medium (for example, a CD-ROM or a digital versatile disc (DVD)). The computer-readable recording medium may be dispersed to computer systems connected by a network so that computer-readable codes may be stored and executed in a dispersion manner. The medium may be read by a computer, may be stored in a memory, and may be executed by the processor.

The example embodiments may be represented by functional blocks and various processing steps. These functional blocks may be implemented by various numbers of hardware and/or software configurations that execute specific functions. For example, the example embodiments may adopt direct circuit configurations such as a memory, a processor, a logic circuit, and a look-up table that may execute various functions by control of one or more microprocessors or other control devices. Similarly to that elements may be executed by software programming or software elements, the example embodiments may be implemented by programming or scripting languages such as C, C++, Java, and assembler including various algorithms implemented by combinations of data structures, processes, routines, or of other programming configurations. Functional aspects may be implemented by algorithms executed by one or more processors. In addition, the example embodiments may adopt the related art for electronic environment setting, signal processing, and/or data processing, for example. The terms "mechanism", "element", "means", and "configuration" may be widely used and are not limited to mechanical and physical components. These terms may include meaning of a series of routines of software in association with a processor, for example.

As used herein, the terms indicating order, such as first, second, etc., are used to distinguish elements having the same/similar functions, and the ordinal numbers may be interchanged according to the order in which the terms are mentioned.

As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof. The term "and/or" includes any and all combinations of one or more of the associated listed items. The term "connected" may be used herein to refer to a physical and/or electrical connection and may refer to a direct or indirect physical and/or electrical connection.

Embodiments are set out in the following Clauses:
Clause 1. An operating method performed in a storage device comprising a non-volatile memory (NVM), the operating method comprising:
   acquiring quality of service (QoS) information;
   obtaining a read request or write request for data in the NVM from a host; and
   allocating a logical-to-physical (L2P) slot of a plurality of L2P slots including L2P mapping information corresponding to the data to at least one namespace among a plurality of namespaces of a dynamic random-access memory (DRAM) based on the QoS information.
Clause 2. The operating method of Clause 1, further comprising:
   limiting a number of the L2P slots included in each of the plurality of namespaces based on the QoS information.
Clause 3. The operating method of Clause 1 or Clause 2, further comprising:
   allocating the L2P slot to the plurality of namespaces of the DRAM based on a size ratio of each of a plurality of namespaces of the NVM when an acquisition of the QoS information has failed.
Clause 4. The operating method of any preceding Clause, further comprising:
   obtaining a request to generate a DRAM namespace from the host;
   generating the DRAM namespace based on a predetermined size or a subsystem local memory (SLM) ratio, in response to the request to generate the DRAM namespace; and
   mapping the DRAM namespace to one NVM namespace among a plurality of namespaces of the NVM based on information included in the request to generate the DRAM namespace.
Clause 5. The operating method of Clause 4, further comprising:
   acquiring a request to de-map an NVM namespace mapped with the DRAM namespace from the host; and
   indicating at least a portion of L2P mapping information stored in the DRAM namespace are invalid or removing the portions of L2P mapping information stored in the DRAM namespace.
Clause 6. The operating method of any preceding Clause, wherein a state of the L2P slot is one of a clean state, a dirty state, or a provisioning state, and the method further comprising:
   setting a size of the L2P slot based on the state of the L2P slot.
Clause 7. The operating method of Clause 6, wherein the clean state indicates that L2P mapping information included in the L2P slot is valid or stable, and
   wherein the dirty state indicates that L2P mapping information included in the L2P slot is removed or changed.
Clause 8. The operating method of Clause 6 or Clause 7, wherein the provisioning state indicates that writing of L2P mapping information included in the L2P slot is in preparation or in progress.
Clause 9. The operating method of any preceding Clause, further comprising:
   obtaining a write request or read request for additional data from the host; and
   allocating, based on whether L2P mapping information corresponding to the additional data exist in the plurality of namespaces of the DRAM, L2P mapping information corresponding to the additional data to one of the plurality of namespaces.
Clause 10. The operating method of Clause 9, wherein allocating the L2P mapping information of the additional data to one of the plurality of namespaces comprises:
   acquiring the L2P information corresponding to the additional data from a meta region included in the NVM when an L2P cache corresponding to the additional data does not exist in the plurality of namespaces of the DRAM; and
   allocating the L2P mapping information corresponding to the additional data to an L2P slot of one namespace among the plurality of namespaces based on the QoS information,
   wherein L2P mapping information is obtained by converting a logical block address (LBA) to a physical block address (PBA).
Clause 11. The operating method of Clause 10, wherein the meta region includes at least one of a single-level cell (SLC) region and a multi-level cell (MLC) region.
Clause 12. A memory controller configured to control an operating method of a storage device comprising a non-volatile memory (NVM), the memory controller comprising:
   a memory interface configured to communicate with the NVM; and
   a processor configured to control the memory interface,
   wherein the processor is configured to acquire quality of service (QoS) information,
   obtain a write request or read request for data from a host, and
   allocate a logical-to-physical (L2P) slot of a plurality of L2P slots including L2P mapping information corresponding to the data to at least one namespace among a plurality of namespaces of a dynamic random-access memory (DRAM).
Clause 13. The memory controller of Clause 12, wherein the processor is configured to limit a number of the L2P slots included in each of the plurality of namespaces based on the QoS information.
Clause 14. The memory controller of Clause 12 or Clause 13, wherein the processor is configured to allocate the L2P slot to the plurality of namespaces of the DRAM based on a size ratio of each of a plurality of namespaces of the NVM when an acquisition of the QoS information has failed.
Clause 15. A storage device comprising:
   a dynamic random-access memory (DRAM) and a non-volatile memory (NVM); and
   a memory controller configured to control the DRAM and the NVM,
   wherein the memory controller is configured to acquire quality of service (QoS) information,
   obtain a write request or read request for data from a host, and
   allocate a logical-to-physical (L2P) slot including L2P of a plurality of L2P slots mapping information corresponding to the data to at least one namespace among a plurality of namespaces of the DRAM based on the QoS information.

The example embodiments described above are mere examples only and other embodiments may be implemented within the scope of the following claims.

## Claims

1. An operating method performed in a storage device comprising a non-volatile memory, NVM, the operating method comprising:
acquiring (S210) quality of service, QoS, information;
obtaining (S230) a read request or write request for data in the NVM from a host; and
allocating (S250) a logical-to-physical, L2P, slot of a plurality of L2P slots including L2P mapping information corresponding to the data to at least one namespace among a plurality of namespaces of a dynamic random-access memory, DRAM, based on the QoS information.

2. The operating method of claim 1, further comprising:
limiting a number of the L2P slots included in each of the plurality of namespaces of the DRAM based on the QoS information.

3. The operating method of claim 1 or claim 2, further comprising:
allocating the L2P slot to the plurality of namespaces of the DRAM based on a size ratio of each of a plurality of namespaces of the NVM when an acquisition of the QoS information has failed.

4. The operating method of any preceding claim, further comprising:
obtaining (S410) a request to generate a DRAM namespace from the host;
generating (S430) the DRAM namespace based on a predetermined size or a subsystem local memory, SLM, ratio, in response to the request to generate the DRAM namespace; and
mapping (S450) the DRAM namespace to one NVM namespace among a plurality of namespaces of the NVM based on information included in the request to generate the DRAM namespace.

5. The operating method of claim 4, further comprising:
acquiring a request to de-map an NVM namespace mapped to the DRAM namespace from the host; and
indicating at least a portion of L2P mapping information stored in the DRAM namespace are invalid or removing at least the portions of L2P mapping information stored in the DRAM namespace.

6. The operating method of any preceding claim, wherein a state of the L2P slot is one of a clean state, a dirty state, or a provisioning state, and the method further comprising:
setting a size of the L2P slot based on the state of the L2P slot.

7. The operating method of claim 6, wherein the clean state indicates that L2P mapping information included in the L2P slot is valid or stable, and
wherein the dirty state indicates that the L2P mapping information included in the L2P slot is removed or changed.

8. The operating method of claim 6 or claim 7, wherein the provisioning state indicates that writing of L2P mapping information included in the L2P slot is in preparation or in progress.

9. The operating method of any preceding claim, further comprising:
obtaining a write request or read request for additional data from the host; and
allocating, based on whether L2P mapping information corresponding to the additional data exist in the plurality of namespaces of the DRAM, L2P mapping information corresponding to the additional data to one of the plurality of namespaces of the DRAM.

10. The operating method of claim 9, wherein allocating the L2P mapping information corresponding to the additional data to one of the plurality of namespaces of the DRAM comprises:
acquiring the L2P mapping information corresponding to the additional data from a meta region included in the NVM when the L2P mapping information corresponding to the additional data does not exist in the plurality of namespaces of the DRAM; and
allocating the L2P mapping information corresponding to the additional data to an L2P slot of one namespace among the plurality of namespaces of the DRAM based on the QoS information,
wherein the L2P mapping information is obtained by converting a logical block address to a physical block address.

11. The operating method of claim 10, wherein the meta region includes at least one of a single-level cell region and a multi-level cell region.

12. A memory controller (900) configured to control an operating method of a storage device comprising a non-volatile memory, NVM, the memory controller (900) comprising:
a memory interface (930) configured to communicate with the NVM; and
a processor (910) configured to control the memory interface,
wherein the processor (910) is configured:
to acquire (S210) quality of service, QoS, information;
obtain (S230) a write request or read request for data from a host; and
allocate (S250) a logical-to-physical, L2P, slot of a plurality of L2P slots including L2P mapping information corresponding to the data to at least one namespace among a plurality of namespaces of a dynamic random-access memory, DRAM.

13. The memory controller of claim 12, wherein the processor (910) is configured to limit a number of the L2P slots included in each of the plurality of namespaces of the DRAM based on the QoS information.

14. The memory controller of claim 12 or claim 13, wherein the processor (910) is configured to allocate the L2P slot to the plurality of namespaces of the DRAM based on a size ratio of each of a plurality of namespaces of the NVM when an acquisition of the QoS information has failed.

15. A storage device comprising:
a dynamic random-access memory, DRAM, and a non-volatile memory, NVM; and
the memory controller according to any of claims 12-14, wherein the memory controller (900) is configured to control the DRAM and the NVM.
